# EUROPEAN PATENT SPECIFICATION

(11) **EP 2 920 046 B1**
(45) Date of publication and mention of the grant of the patent: **09.08.2017**
(21) Application number: 13803328.7
(22) Date of filing: 14.11.2013
(51) Int. Cl.: B29C 44/12, C09J 7/04, B62D 29/00

(54) **EXPANDING PANEL STIFFENER**
EXPANDIERBARE PLATTENVERSTEIFUNG
RAIDISSEUR DE PANNEAU À EXPANSION

(30) Priority: 14.11.2012 US 201261726259 P
(43) Date of publication of application: 23.09.2015
(73) Proprietor: Zephyros Inc., Romeo, MI 48065 (US)
(72) Inventor: QUADERER, Dean, Livonia, MI 48150 (US)
(74) Representative: Kutzenberger Wolff & Partner
(86) International application number: PCT/US2013/070059
(87) International publication number: WO 2014/078510

(56) References cited:
- US-A1- 2003 039 792
- US-A1- 2003 183 317
- US-A1- 2005 166 532
- US-A1- 2007 101 679

## Description

### Technical Field

The present teachings relate generally to a reinforcement member that includes an activatable material and a layer of mesh.

### Background

The transportation industry continues to require methods of reinforcement that minimize production time and effort while improving the strength of reinforcement provided and providing simplified customization of product shape and configuration. There is thus a need in the art of reinforcement for high-strength reinforcing materials that can be easily added to a vehicle panel for localized reinforcement with no additional fastening steps. There is a further need for reinforcing materials that can be easily cut to a desired shape and size without the need for molds or additional forming steps. A structurally reinforced vehicle panel by means of a device according to the preamble of claim 1 is known from document US 2003/0039792A1.

### Summary of the Invention

This object is achieved by a device exhibiting the features characterised in independent claim 1, and by a method for using such a device, as described in independent claim 7. In a first aspect the present teachings contemplate a device comprising an expandable material and a fiberglass mesh located in direct planar contact with the expandable material and along the entirety of the expandable material. The expandable material is tacky prior to expansion allowing the expandable material to adhere to the fiberglass mesh and to a surface for reinforcing the surface.

The device may be configured to conform to the shape of the surface. The device may be flexible (e.g., capable of easily bending without breaking) prior to expansion of the expandable material. The device bends under its own weight when held at its end. The volumetric activation of the expandable material may be at least about 100% and less than about 300%. The expandable material may include a structural adhesive material. The expandable material may include a sealant material.

The present teachings further contemplate a method for structurally reinforcing a vehicle body stamping comprising forming a tacky expandable structural adhesive material and locating a mesh material onto the expandable material. The method further includes contacting the mesh and expandable material with a vehicle body stamping surface and activating the expandable material to expand by application of heat. The mesh and expandable material remain in contact with the stamping surface by means of the tacky nature of the expandable material prior to activating the expandable material.

The method is free of any separate fastening step for connecting the expandable material to the body stamping. The method may include flexing the expandable material and mesh to conform to the shape of the body stamping prior to activating the expandable material. The method may include cutting the expandable material to a desired shape prior to locating the mesh onto the expandable material. The method may include cutting the expandable material and mesh located thereon to a desired shape prior to contacting the mesh and expandable material with the vehicle body stamping surface. The step of forming the tacky expandable structural adhesive material may be free of any molding process. The step of locating the mesh onto the expandable material may be free of any separate fastening step for connecting the mesh to the expandable material. The step of activating the expandable material includes volumetric expansion of at least about 100% and less than about 300%. The method may include flexing the expandable material and mesh so that a first portion of the mesh and expandable material is arranged at an angle of 90° or less from a second portion of the mesh and expandable material. The method may include flexing the expandable material and mesh so that a surface of the vehicle body stamping is contacted by the mesh and expandable material that would not be contacted by the mesh and expandable material if the mesh and expandable material were substantially rigid. The mesh may be located onto the expandable material so that the expandable material substantially covers the mesh and is free of any voids on the mesh that are not covered with the expandable material prior to activation. The mesh and expandable material may no longer be flexible after activation of the expandable material. The mesh and expandable material may continue to be flexible after activation of the expandable material.

The teachings herein contemplate a device and method for the structural reinforcement of body stampings with an expandable structural adhesive material and associated mesh. The device disclosed herein may allow for effective reinforcing of a cavity where no additional fastening steps or fastening means are required.

### Description of the Drawings

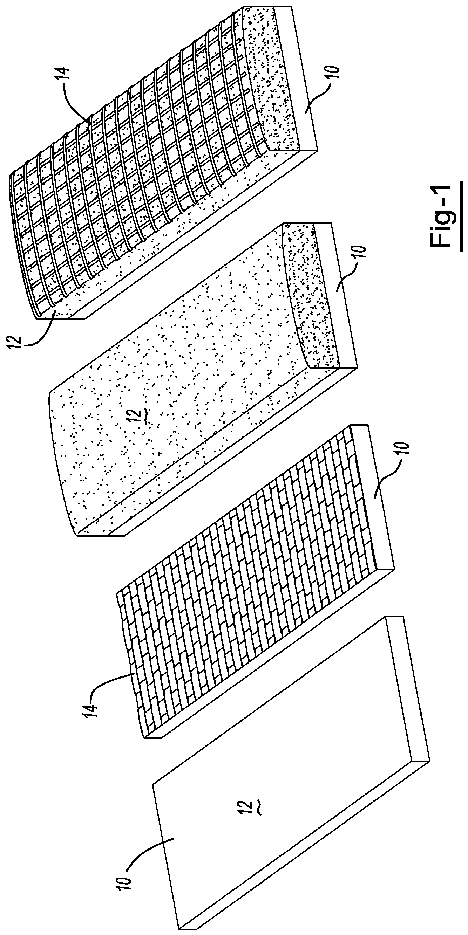

Fig. 1 shows a perspective view of an illustrative example of a device in accordance with the present teachings.

### Detailed Description

This application is related to and claims the benefit of the filing date of U.S. Provisional Application Serial No. 61/726,259 filed November 14, 2012.

The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the above description, but should instead be determined with reference to the appended claims

Fig. 1 shows the device 10 having an expandable material layer 12. A mesh layer 14 is located in planar contact with the expandable material layer 12.

The expandable material of the present invention is at least partially tacky at room temperature (e.g., about 23° C.) and is also preferably tacky at temperatures between about 0° C. and about 80° C. Additionally, the expandable material preferably exhibits reinforcement characteristics (e.g., imparts rigidity, stiffness, strength or a combination thereof to a member). It is also preferable for the expandable material to be heat activated to expand or otherwise activate and wet surfaces which the expandable material contacts. After expansion or activation, the expandable material preferably cures, hardens and adheres to the surfaces that it contacts. For application purposes, it is often preferable that the expandable material exhibit flexibility, particularly when the expandable material is to be applied to a contoured surface of a vehicle body. Once applied, however, it is typically preferable for the expandable material to be activatable to soften, expand (e.g., foam), cure, harden or a combination thereof. For example, and without limitation, a typical expandable material will include a polymeric material, such as an epoxy resin or ethylene-based polymer which, when compounded with appropriate ingredients (typically a blowing and curing agent), expands and cures in a reliable and predicable manner upon the application of heat or the occurrence of a particular ambient condition. From a chemical standpoint for a thermally-activated material, the expandable material may be initially processed as a flowable material before curing. Thereafter, the base material preferably cross-links upon curing, which makes the material substantially incapable of further flow.

The epoxy may be aliphatic, cycloaliphatic, aromatic or the like. The epoxy may be supplied as a solid (e.g., as pellets, chunks, pieces or the like) or a liquid. The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive. Examples of suitable epoxy-based materials, which may be used as in the base material are sold under the product designations L5020, L5010, L5224, L8000, L5001 and are commercially available from L&L Products, Romeo, Mich. According to preferred formulations, the base material can include up to about 50% by weight epoxy resins, more preferably, up to about 65% by weight epoxy resins, and even more preferably up to about 80% by weight epoxy resins.

In preferred embodiments, a substantial portion of the materials in the expandable material will typically have molecular weights that are low enough to maintain adhesive capability of the base material. For an elastomer-based or epoxy-based base material, it is preferable for at least about 5% by weight of the elastomer or epoxy materials to have a molecular weight less than about 1000 and more preferably at least about 10% by weight of the elastomer or epoxy materials have a molecular weight less than about 1000. It is also contemplated that, for maintaining adhesive capability, components such as plasticizers or processing oils may be added to elastomer-based or epoxy-based materials and particularly to the thermoplastic-based expandable material.

According to the invention, at least 1% by weight of the components have a low enough molecular weight to be a liquid at about 23° C. Preferably, at least 5% by weight of the components have a low enough molecular weight to be a liquid at about 23° C. More preferably, at least 10% by weight of the components have a low enough molecular weight to be a liquid at about 23° C.

In most applications, it is undesirable for the expandable material to be reactive at room temperature or otherwise at the ambient temperature in a manufacturing environment (e.g. up to about 40° C. or higher). More typically, the expandable material becomes reactive at higher processing temperatures, such as those encountered in an automobile assembly plant. In such and embodiment, the expandable material may be foamed upon automobile components at elevated temperatures or at higher applied energy levels, e.g., during painting preparation steps. While temperatures encountered in an automobile assembly operation may be in the range of about 148.89° C. to 204.44° C. (about 300° F. to 400° F.), body and paint shop applications are commonly about 93.33° C. (about 200° F.) or slightly higher. If needed, blowing agent activators can be incorporated into the base material to cause expansion at different temperatures outside the above ranges. Generally, suitable expandable materials or foams for the expandable material have a range of expansion ranging from approximately 0 to over 1000 percent.

Advantageously, the expandable material of the present invention may be formed or otherwise processed in a variety of ways. For example, preferred expandable materials can be processed by injection molding, extrusion, compression molding or with a robotically controlled extruder such as a mini-applicator. This enables the formation and creation of part designs that exceed the capability of most prior art materials.

It is contemplated that the base material may be formed of a variety of materials. For example, and without limitation, the base material may be formed primarily of plastics, thermoplastics, epoxy materials, elastomers and the like or combination thereof.

The mesh material located onto the expandable material may include nonconductive threads or wire (e.g., elongated filament, fibrous, or fabric material), which may be applied as a mat, a cloth, a roving, a netting, a mesh, a scrim, or the like. In such embodiments, the strengthening material may be composed, for example, of woven or unwoven fibers, filaments or the like of cotton, glass (e.g., E-glass or S-glass), fiberglass, Mylar, nylon, polyester, carbon, aramid, plastics, polymers (e.g., thermoplastics such as polyamides (e.g., nylon), PET (e.g., Mylar), polycarbonate, polyethylene, polypropylene, polybutylene (e.g., polybutylene terephthalate), polystyrene, polyurethane, vinyl, or any combination thereof, or other materials. As used herein, "threads," or "wire" connotes a single filament of material, a braided bundle of filaments, or an unbraided bundle of filaments.

In other applications, it may appreciable that the mesh material may be bead-like particles, aggregates, hollow material (e.g., hollow particle), or otherwise, or any combination thereof. In such embodiments, the strengthening material may be composed, for example, of particles or the like of glass (e.g., E-glass or S-glass), fiberglass, nylon, polyester, carbon, aramid, plastics, polymers (e.g., thermoplastics such as polyamides (e.g., nylon), polycarbonate, polyethylene, polypropylene, polybutylene (e.g., polybutylene terephthalate), polystyrene, polyurethane, vinyl, or any combination thereof), or other materials.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The disclosures of all articles and references, including patent applications and publications, are incorporated by reference for all purposes. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. By use of the term "may" herein, it is intended that any described attributes that "may" be included are optional.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

It is understood that the above description is intended to be illustrative and not restrictive. Many embodiments as well as many applications besides the examples provided will be apparent to those of skill in the art upon reading the above description. The scope of the invention should, therefore, be determined not with reference to the above description, but should instead be determined with reference to the appended claims.

## Claims

1. A device (10) comprising:
an expandable material (12);
a fiberglass mesh (14),
wherein the expandable material (12) is tacky prior to expansion allowing the expandable material (12) to adhere to the fiberglass mesh (14) and to a surface for reinforcing the surface,
**characterized in that**
the fiberglass mesh (14) is located in direct planar contact with the expandable material (12) and along the entirety of the expandable material (12);
wherein the device (10) will bend under its own weight when held at its end,
and wherein at least 1% by weight of the components of the expandable material (12) have a low enough molecular weight to be a liquid at about 23° C.

2. The device (10) of claim 1, wherein the device (10) is configured to conform to the shape of the surface.

3. The device (10) of claim 1 or claim 2, wherein the device (10) is flexible.

4. The device (10) of any one of the preceding claims, wherein the volumetric activation of the expandable material (12) is at least about 100% and less than about 300%.

5. The device (10) of any one of the preceding claims, wherein the expandable material (12) includes a structural adhesive material.

6. The device (10) of any one of the preceding claims, wherein the expandable material (12) includes a sealant material.

7. A method for using the device (10) of claim 1, comprising:
forming the expandable material (12);
locating the fiberglass mesh material (14) onto the expandable material (12);
contacting the mesh (14) and expandable material (12) with a vehicle body stamping surface;
activating the expandable material (12) to expand by application of heat;
wherein the mesh (14) and expandable material (12) remain in contact with the stamping surface by means of the tacky nature of the expandable material (12) prior to activating the expandable material (12),
wherein the step of locating the mesh (14) onto the expandable material (12) is free of any separate fastening step for connecting the mesh to the expandable material (12), wherein at least 1 % by weight of the components of the expandable material (12) have a low enough molecular weight to be a liquid at about 23° C.

8. The method of claim 7, wherein the method is free of any separate fastening step for connecting the expandable material (12) to the body stamping.

9. The method of claim 7 or claim 8, including flexing the expandable material (12) and mesh to conform to the shape of the body stamping prior to activating the expandable material (12).

10. The method of any one of claims 7 through 9, including cutting the expandable material (12) to a desired shape prior to locating the mesh (14) onto the expandable material (12).

11. The method of any one of claims 7 through 10, including cutting the expandable material (12) and mesh (14) located thereon to a desired shape prior to contacting the mesh and expandable material (12) with the vehicle body stamping surface.

12. The method of any one of claims 7 through 11, wherein the step of forming the tacky expandable structural adhesive material is free of any molding process.

13. The method of any one of claims 7 through 12, including flexing the expandable material (12) and mesh (14) so that a first portion of the mesh (14) and expandable material (12) is arranged at an angle of 90° or less from a second portion of the mesh (14) and expandable material (12).

14. The method of any one of claims 7 through 13, including flexing the expandable material (12) and mesh (14) so that a surface of the vehicle body stamping is contacted by the mesh (14) and expandable material (12) that would not be contacted by the mesh (14) and expandable material (12) if the mesh (14) and expandable material (12) were substantially rigid.

## Patentansprüche

1. Vorrichtung (10), die Folgendes umfasst:
ein ausdehnbares Material (12);
ein Fiberglasnetz (14),
wobei das ausdehnbare Material (12) vor der Ausdehnung klebrig ist, wodurch ermöglicht wird, dass das ausdehnbare Material (12) an dem Fiberglasnetz (14) und an einer Oberfläche zum Verstärken der Oberfläche haftet,
**dadurch gekennzeichnet, dass**
sich das Fiberglasnetz (14) in direktem ebenflächigen Kontakt mit dem ausdehnbaren Material (12) und entlang des gesamten ausdehnbaren Materials (12) befindet;
wobei sich die Vorrichtung (10) unter ihrem eigenen Gewicht biegen wird, wenn sie an ihrem Ende gehalten wird,
und wobei wenigstens 1 Gew.-% der Komponenten des ausdehnbaren Materials (12) ein molekulares Gewicht aufweist, das niedrig genug ist, um bei etwa 23°C eine Flüssigkeit zu sein.

2. Vorrichtung (10) nach Anspruch 1, wobei die Vorrichtung (10) dazu konfiguriert ist, sich der Form der Oberfläche anzupassen.

3. Vorrichtung (10) nach Anspruch 1 oder Anspruch 2, wobei die Vorrichtung (10) flexibel ist.

4. Vorrichtung (10) nach einem der vorhergehenden Ansprüche, wobei die volumetrische Aktivierung des ausdehnbaren Materials (12) wenigstens etwa 100% und weniger als etwa 300% beträgt.

5. Vorrichtung (10) nach einem der vorhergehenden Ansprüche, wobei das ausdehnbare Material (12) ein strukturelles haftendes Material beinhaltet.

6. Vorrichtung (10) nach einem der vorhergehenden Ansprüche, wobei das ausdehnbare Material (12) ein Dichtungsmaterial beinhaltet.

7. Verfahren zur Verwendung der Vorrichtung (10) nach Anspruch 1, das Folgendes umfasst:
Bilden des ausdehnbaren Materials (12);
Platzieren des Fiberglasnetzmaterials (14) auf dem ausdehnbaren Material (12);
Kontaktieren des Netzes (14) und des ausdehnbaren Materials (12) mit einer Fahrzeugkarosseriestanzteiloberfläche;
Aktivieren des ausdehnbaren Materials (12) zum Ausdehnen durch die Anwendung von Wärme;
wobei das Netz (14) und das ausdehnbare Material (12) aufgrund der klebrigen Natur des ausdehnbaren Materials (12) vor dem Aktivieren des ausdehnbaren Materials (12) in Kontakt mit der Stanzteiloberfläche verbleiben,
wobei der Schritt des Platzierens des Netzes (14) auf dem ausdehnbaren Material (12) frei von jeglichem getrennten Befestigungsschritt zum Verbinden des Netzes mit dem ausdehnbaren Material (12) ist,
wobei wenigstens 1 Gew.-% der Komponenten des ausdehnbaren Materials (12) ein molekulares Gewicht aufweist, das niedrig genug ist, um bei etwa 23°C eine Flüssigkeit zu sein.

8. Verfahren nach Anspruch 7, wobei das Verfahren frei von jeglichem Befestigungsschritt zum Verbinden des ausdehnbaren Materials (12) mit dem Karosseriestanzteil ist.

9. Verfahren nach Anspruch 7 oder 8, das Biegen des ausdehnbaren Materials (12) und des Netzes beinhaltet, so dass sie sich der Form des Karosseriestanzteils vor dem Aktivieren des ausdehnbaren Materials (12) anpassen.

10. Verfahren nach einem der Ansprüche 7 bis 9, das Schneiden des ausdehnbaren Materials (12) in eine gewünschte Form, bevor das Netz (14) auf dem ausdehnbaren Material (12) platziert wird, beinhaltet.

11. Verfahren nach einem der Ansprüche 7 bis 10, das Schneiden des ausdehnbaren Materials (12) und des Netzes (14), das sich auf diesem befindet, in eine gewünschte Form, bevor das Netz und das ausdehnbare Material (12) mit der Fahrzeugkarosseriestanzteiloberfläche kontaktiert werden, beinhaltet.

12. Verfahren nach einem der Ansprüche 7 bis 11, wobei der Schritt des Bildens des klebrigen ausdehnbaren strukturellen haftenden Materials frei von jeglichem Gussprozess ist.

13. Verfahren nach einem der Ansprüche 7 bis 12, das Biegen des ausdehnbaren Materials (12) und des Netzes (14) beinhaltet, so dass ein erster Teil des Netzes (14) und des ausdehnbaren Materials (12) in einem Winkel von 90° oder weniger von einem zweiten Teil des Netzes (14) und des ausdehnbaren Materials (12) angeordnet ist.

14. Verfahren nach einem der Ansprüche 7 bis 13, das Biegen des ausdehnbaren Materials (12) und des Netzes (14) beinhaltet, so dass eine Oberfläche des Fahrzeugkarosseriestanzteils durch das Netz (14) und das ausdehnbare Material (12) kontaktiert wird, welche nicht durch das Netz (14) und das ausdehnbare Material (12) kontaktiert würde, wenn das Netz (14) und das ausdehnbare Material (12) im Wesentlichen starr wären.

## Revendications

1. Dispositif (10), comprenant:
un matériau expansible (12);
un treillis de fibre de verre (14),
dans lequel le matériau expansible (12) est collant avant l'expansion afin de permettre au matériau expansible (12) d'adhérer au treillis de fibre de verre (14) et à une surface dans le but de renforcer la surface,
**caractérisé en ce que** le treillis de fibre de verre (14) est situé en contact planaire direct avec le matériau expansible (12) et le long de la totalité du matériau expansible (12);
dans lequel le dispositif (10) pliera sous son propre poids lorsqu'il sera tenu à son extrémité, et
dans lequel au moins 1 % en poids des composants du matériau expansible (12) présente un poids moléculaire suffisamment bas pour être un liquide à environ 23°C.

2. Dispositif (10) selon la revendication 1, dans lequel le dispositif (10) est configuré de manière à épouser la forme de la surface.

3. Dispositif (10) selon la revendication 1 ou la revendication 2, dans lequel le dispositif (10) est flexible.

4. Dispositif (10) selon l'une quelconque des revendications précédentes, dans lequel l'activation volumétrique du matériau expansible (12) est d'au moins environ 100 % et inférieure à environ 300 %.

5. Dispositif (10) selon l'une quelconque des revendications précédentes, dans lequel le matériau expansible (12) comprend un matériau adhésif structurel.

6. Dispositif (10) selon l'une quelconque des revendications précédentes, dans lequel le matériau expansible (12) comprend un matériau de scellage.

7. Procédé d'utilisation du dispositif (10) selon la revendication (1), comprenant les étapes suivantes:
former le matériau expansible (12);
positionner le matériau de treillis de fibre de verre (14) sur le matériau expansible (12);
mettre en contact le treillis (14) et le matériau expansible (12) avec une surface d'estampage de carrosserie de véhicule;
activer le matériau expansible (12) à expanser par application de chaleur;
dans lequel le treillis (14) et le matériau expansible (12) restent en contact avec la surface d'estampage en raison de la nature collante du matériau expansible (12) avant l'activation du matériau expansible (12);
dans lequel l'étape de positionnement du treillis (14) sur le matériau expansible (12) est exempte de toute étape de fixation séparée pour connecter le treillis au matériau expansible (12),
dans lequel au moins 1 % en poids des composants du matériau expansible (12) présente un poids moléculaire suffisamment bas pour être un liquide à environ 23°C.

8. Procédé selon la revendication 7, dans lequel le procédé est exempt de toute étape de fixation séparée pour connecter le matériau expansible (12) à la surface d'estampage de carrosserie.

9. Procédé selon la revendication 7 ou la revendication 8, comprenant la flexion du matériau expansible (12) et du treillis afin d'épouser la forme de la surface d'estampage de carrosserie avant l'activation du matériau expansible (12).

10. Procédé selon l'une quelconque des revendications 7 à 9, comprenant la coupe du matériau expansible (12) à une forme souhaitée avant le positionnement du treillis (14) sur le matériau expansible (12).

11. Procédé selon l'une quelconque des revendications 7 à 10, comprenant la coupe du matériau expansible (12) et du treillis (14) situé sur celui-ci à une forme souhaitée avant la mise en contact du treillis et du matériau expansible (12) avec la surface d'estampage de carrosserie de véhicule.

12. Procédé selon l'une quelconque des revendications 7 à 11, dans lequel l'étape de formation du matériau adhésif structurel expansible collant est exempte de tout procédé de moulage.

13. Procédé selon l'une quelconque des revendications 7 à 12, comprenant la flexion du matériau expansible (12) et du treillis (14) de telle sorte qu'une première partie du treillis (14) et du matériau expansible (12) soit agencée à un angle de 90° ou moins par rapport à une seconde partie du treillis (14) et du matériau expansible (12).

14. Procédé selon l'une quelconque des revendications 7 à 13, comprenant la flexion du matériau expansible (12) et du treillis (14) de telle sorte qu'une surface d'estampage de carrosserie de véhicule soit touchée par le treillis (14) et le matériau expansible (12) alors qu'elle ne serait pas touchée par le treillis (14) et le matériau expansible (12) si le treillis (14) et le matériau expansible (12) étaient sensiblement rigides.
